# EUROPÄISCHE PATENTANMELDUNG

(11) **EP 3 698 861 A1**
(43) Veröffentlichungstag der Anmeldung: **26.08.2020**
(21) Anmeldenummer: 20154359.2
(22) Anmeldetag: 29.01.2020
(51) Int. Cl.: B01D 29/01

(54) **FILTERVORRICHTUNG**

(30) Priorität: 23.02.2019 DE 102019001309
(71) Anmelder: Hydac Filtertechnik GmbH, 66280 Sulzbach/Saar (DE)
(72) Erfinder: Kleemann, Daniel, 57515 Alsting (FR); Nenno, Alexander, 66606 St. Wendel (DE); Plagemann, Markus, 66894 Rosenkopf (DE); Schneider, André Michael, 66399 Mandelbachtal (DE)
(74) Vertreter: Bartels und Partner, Patentanwälte

(57) **Zusammenfassung**

2. Eine Filtervorrichtung, insbesondere für die Getriebeölfiltration, mit zwei aus Längs- und Querholmen (10) bestehenden Rahmen- oder Kassettenteilen (2, 4), die übereinandergelegt zumindest teilweise eine Durchflussfläche aufspannen, die von einem Filtermedium (12) überdeckt ist, das randseitig zwischen den Rahmenteilen (2, 4) festgelegt ist, ist dadurch gekennzeichnet, dass das Filtermedium (12) plissiert ist und dass die jeweilige Filterfalte (14), soweit sie zwischen die beiden Rahmen- oder Kassettenteile (2, 4) eingreift, flachgedrückt ist.

## Beschreibung

Die Erfindung betrifft eine Filtervorrichtung, insbesondere für die Getriebeölfiltration, mit zwei aus Längs- und Querholmen bestehenden Rahmen- oder Kassettenteilen, die übereinandergelegt zumindest teilweise eine Durchflussfläche aufspannen, die von einem Filtermedium überdeckt ist, das randseitig zwischen den Rahmenteilen festgelegt ist.

Für Filtervorrichtungen, die zur Getriebeölfiltration vorgesehen sind, stehen meist nur beengte Einbauräume zur Verfügung, beispielsweise in der Ölwanne von Getriebegehäusen für Automatikgetriebe oder dergleichen. Daher ist es oftmals schwierig, übliche, recht groß aufbauende Filtervorrichtungen mit kreiszylinderförmigem Filterelement in dahingehende Getriebegehäuse einzubauen. Um dieser Schwierigkeit zu begegnen, ist es, wie in EP 0 995 535 B1 aufgezeigt, Stand der Technik, zur Getriebeölfiltration bei Automatikgetrieben sogenannte Flachfilter einzusetzen, bei denen Filtermedien in Form einlagiger, flacher Bahnen vorgesehen sind. Zwar lassen sich hierbei Filtervorrichtungen mit für den Einbau in Automatikgetrieben geeigneter, flacher Bauweise realisieren, im Vergleich zu üblichen Filtervorrichtungen, die mit kreiszylinderförmigen und mehrlagigen Filtermedien arbeiten, lässt jedoch das Betriebsverhalten zu wünschen übrig und insbesondere bei der geforderten Schmutzaufnahmekapazität und dem geforderten Differenzdruck bei vorgegebener Filterfeinheit ist mit den Flachfiltern keine ausreichende Effizienz der Abreinigung erreichbar.

Ausgehend von diesem Stand der Technik stellt sich die Erfindung daher die Aufgabe, eine Filtervorrichtung der eingangs genannten Gattung zur Verfügung zu stellen, die sich bei geringer Bauhöhe durch eine verbesserte Filtrationsleistung bei der Filtration auszeichnet.

Gemäß dem kennzeichnenden Teil des Patentanspruchs 1 besteht eine wesentliche Besonderheit der Erfindung darin, dass das Filtermedium plissiert ist und dass die jeweilige Filterfalte, soweit sie zwischen die beiden Rahmen- oder Kassettenteile eingreift, flachgedrückt ist. Durch örtliches Flachdrücken oder Quetschen der Faltung des plissierten Filtermediums in die ursprüngliche flache Form eröffnet sich die Möglichkeit, zwischen den Rahmenteilen ein plissiertes Filtermedium in gleicher Weise wie die Flachbahn eines üblichen Flachfilters aufzuspannen und dadurch die Filtervorrichtung mit für den Einsatz zur Getriebeölfiltration geringer Bauhöhe zu realisieren. Durch die gegenüber einer Flachbahn stark erhöhte wirksame Filterfläche des gefalteten Filtermediums sind gleichzeitig die Nachteile der bekannten Flachfilter hinsichtlich der geringeren Filtrationsleistung bei der Abreinigung und des wegen der geringeren Filterfläche erhöhten Differenzdruckes der bekannten Flachfilter vermieden und die Schmutzaufnahmekapazität erhöht.

Mit Vorteil kann die Anordnung so getroffen sein, dass das Filtermedium mehrlagig ist und zumindest die erste und die letzte Falte dieses Lagenverbundes zwischen den beiden Rahmenteilen entlang deren Querholmen festgelegt sind, die sich parallel zu den Filterfalten erstrecken. Bei dem parallelen Verlauf der Faltung des Filtermediums und der Querholme sind die erste und die letzte Falte ohne Faltenüberlappung zwischen den Querholmen festlegbar. Ohne Schwierigkeit lässt sich dadurch eine größere Anzahl von Filterlagen sicher zwischen den Querholmen festlegen.

Bei vorteilhaften Ausführungsbeispielen hält zumindest eine der Lagen zu den Längsholmen der Rahmenteile derart einen Abstand ein, dass nur die jeweils anderen Lagen von den Längsholmen flachgedrückt sind. Der durch die erhöhte Filterfläche des plissierten Filtermediums bedingte niedrige Differenzdruck eröffnet die Möglichkeit, durch zumindest eine Filterlage, die, wie es in DE 10 2004 061 078 B4 für ein plissiertes Filtermedium aufgezeigt ist, nur eine partielle Überdeckung des Filtermediums zwischen den Längsholmen bildet, eine integrierte Feinfiltration zu realisieren. Wegen des Abstands von den Längsholmen erschweren solche Lagen, da sie nicht gequetscht werden müssen, auch nicht die Festlegung zwischen den Längsholmen.

Bezüglich der für die Festlegung an den Längsholmen verbleibenden Falten kann die Anordnung mit Vorteil so getroffen sein, dass, sofern mehrere benachbart zueinander angeordnete Falten flachgedrückt sind, diese zumindest teilweise aufeinanderliegend zwischen den Rahmenteilen aufgenommen sind.

Die Anordnung kann mit Vorteil ferner so getroffen sein, dass mindestens eine der Lagen des Filtermediums als Grobfilterlage randseitig von den beiden Rahmenteilen festgelegt ist. Grobfilterlagen, vorzugsweise in Form eines Polyamid- oder Polypropylen-Vlieses, lassen sich wegen ihrer Flexibilität und Verformbarkeit einfach und sicher flachdrücken und zwischen den Rahmenteilen festlegen, so dass weitere, weniger flexible Lagen mit Vorteil in den Faltenverbund derart eingefaltet sind, dass sie sich von den Längsholmen in einem Abstand befinden.

Bei besonders vorteilhaften Ausführungsbeispielen ist daher mindestens eine weitere Lage des Filtermediums, als Feinfilterlage ausgebildet, zusammen mit der jeweiligen Grobfilterlage als Faltenverbund gefaltet und zumindest teilweise von den beiden Rahmenteilen freigelassen.

Bei besonders vorteilhaften Ausführungsbeispielen ist die jeweilige Grobfilterlage oder der Lagenverbund aus mindestens einer Grob- und einer Feinfilterlage zumindest auf einer Seite, vorzugsweise auf beiden gegenüberliegenden Seiten, von einer Stützlage eingefasst, die zumindest teilweise zwischen den beiden Rahmenteilen festgelegt ist. Mit Vorteil kann dergestalt ein Mesh-Pack gebildet sein, dessen Breite durch die Grobfilterlagen bestimmt ist, mit Stützlagen, beispielsweise in Form eines PA- oder PP-Netzes, mit geringerer Breite als die Grobfilterlage (n) und mit partiell überdeckter Faltung, vergleiche DE 10 2004 061 078 B4.

Hinsichtlich der Festlegung zwischen den Rahmenteilen kann die Anordnung mit Vorteil so getroffen sein, dass die beiden Rahmenteile auf ihren einander zugewandten Holmflächen zumindest teilweise mit Energierichtungsgebern versehen sind, die auf die jeweilige Filterlage einwirken, sofern diese zwischen den beiden Rahmenteilen aufgenommen ist. Solche Richtungsgeber können durch an Klemmflächen der Rahmenteile vorstehende Klemmkanten gebildet sein. Die Klemmgeometrie kann hierbei gleichzeitig die Abdichtung mit unterstützen. Insbesondere kommt es zur Abdichtung, wenn die Richtungsgeber mit dem Filtermaterial verschweißt sind. Die Kassetten müssen nach außen hin Luftdicht ausgebildet sein.

Ferner können mit Vorteil die beiden vorzugsweise aus Kunststoffmaterialien bestehenden Rahmenteile mit der jeweils aufgenommenen Filterlage miteinander verklebt oder verschweißt sein, vorzugsweise unter Einsatz eines Ultraschall-Schweißverfahrens. In diesem Fall kann die Schweißverbindung selbst die Abdichtung oder die zusätzliche Abdichtung mit der Verklemmung, insbesondere über die Energierichtungsgeber, bilden.

Mit besonderem Vorteil können die beiden Rahmenteile Bestandteile von Halbschalen sein, die für den Einbau in eine Getriebeölwanne vorgesehen sind oder selbst die Getriebeölwanne ausbilden und einmal einen Sauganschluss und einmal einen Öleinlass aufweisen. Mit Vorteil kann hierbei die Verbindung der Halbschalen, beispielsweise durch Ultraschallschweißung, gleichzeitig auch die Festlegung der geklemmten und gedrückten Außenrandbereiche des Faltenverbundes des Filtermediums bilden.

Nachstehend ist die Erfindung anhand von in der Zeichnung dargestellten Ausführungsbeispielen im Einzelnen erläutert.
Es zeigen:
- Fig. 1: eine perspektivische Schrägansicht eines Ausführungsbeispiels der erfindungsgemäßen Filtervorrichtung;
- Fig. 2: eine in einem Eckbereich aufgeschnitten gezeichnete perspektivische Schrägansicht des Ausführungsbeispiels;
- Fig. 3: einen stark schematisch vereinfacht und nicht maßstäblich gezeichneten Längsschnitt eines Längenabschnitts eines oberen und eines unteren Längsholmes des Ausführungsbeispiels in der Position vor dem Zusammendrücken der Falten des Filtermediums;
- Fig. 4: eine der Fig. 3 entsprechende Darstellung, wobei die Position im Zuge des Drück- oder Quetschvorgangs dargestellt ist;
- Fig. 5: eine der Fig. 4 entsprechende Darstellung, wobei die Position im weiteren Verlauf des Drück- oder Quetschvorgangs dargestellt ist;
- Fig. 6: einen vergrößert gezeichneten Teilquerschnitt des Endbereichs von oberem und unterem Querholm des Ausführungsbeispiels, wobei die Position vordem Festlegen des Filtermediums dargestellt ist;
- Fig. 7: eine perspektivische Schrägansicht eines zweiten Ausführungsbeispiels der Filtervorrichtung mit Filterkassette, wobei ein Eckbereich aufgeschnitten dargestellt ist; und
- Fig. 8: einen zentralen Längsschnitt des zweiten Ausführungsbeispiels mit Filterkassette.

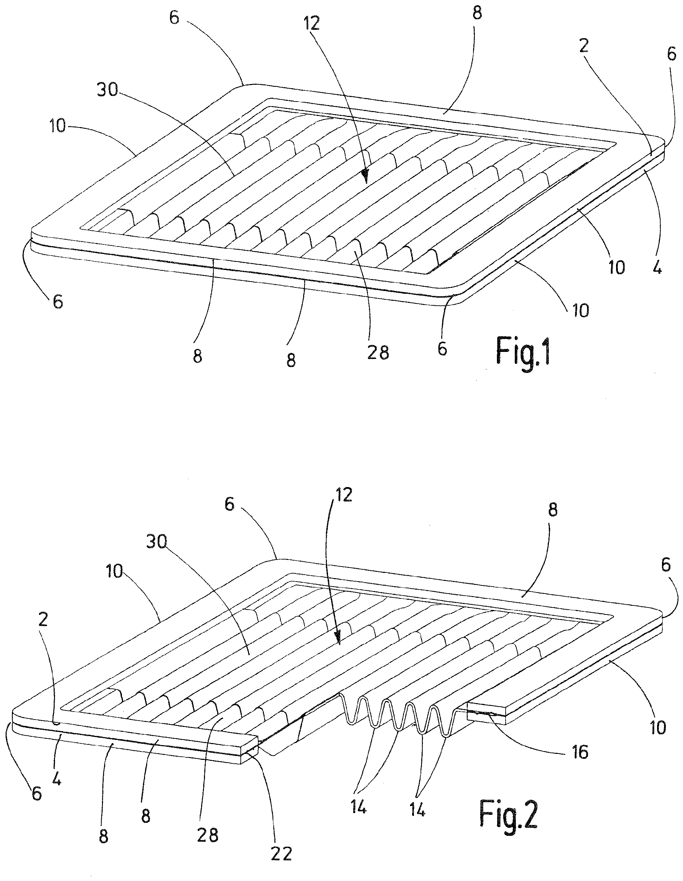

Das in Fig. 1 bis 6 gezeigte Ausführungsbeispiel weist einen Rahmen auf, der aus zwei Rahmenteilen in Form von Gleichteilen gebildet ist, deren oberes Rahmenteil mit 2 und deren unteres Rahmenteilmit 4 bezeichnet sind. Der aus den fluchtend übereinanderliegenden Rahmenteilen 2, 4 gebildete Rahmen ist im Umriss rechteckförmig, mit abgerundeten Eckbereichen 6. Paare von Längsholmen 8 der Rahmenteile 2, 4 bilden die Längsseite der Rechteckform und Paare von Querholmen 10 die Schmalseite. Die Längsholme 8 und die Querholme 10 sind flache Leisten mit jeweils gleichem Querschnitt, wobei die Breite etwa dem 5-fachen der Dicke der Querschnittsform entspricht. Mit den aus Kunststoff bestehenden Rahmenteilen 2 und 4 umgrenzt der Rahmen eine rechteckförmige Freifläche als Durchflussfläche für ein zu filtrierendes Fluid, das ein zwischen den Rahmenteilen 2, 4 aufgespanntes Filtermedium 12 durchströmt.

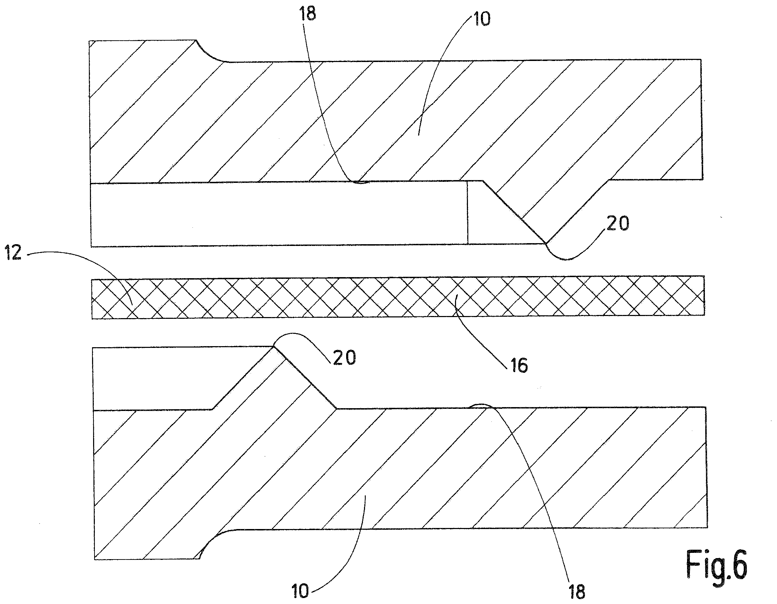

Bei der erfindungsgemäßen Filtervorrichtung ist das Filtermedium 12 durch eine plissierte Filterbahn gebildet, bei der sich die Folge der Falten 14 in einer Ebene erstreckt. Beim vorliegenden Beispiel ist das Filtermedium 12 als Lagenverbund mit mehreren eingefalteten Strukturlagen ausgebildet. Mit seinen umfänglichen Randbereichen ist der Lagenverbund zwischen den Holmen 8 und 10 der Rahmenteile 2, 4 durch Verklemmen so festgelegt, dass das Filtermedium 12 in einer Ebene aufgespannt ist, die die von den Holmen 8 und 10 begrenzte Durchflussfläche für die Filtration bildet. Beim gezeigten Beispiel sind die erste und die letzte Falte 14 jeweils den Querholmen 10 zugeordnet. Für das Verklemmen zwischen den Querholmen 10 sind die letzten ein bis vier Falten 14 flachgelegt, so dass ihr flacher Endrand 16, s. Fig. 2 und 6, zwischen den Querholmen 10 klemmbar ist.

Wie Fig. 6 am deutlichsten zeigt, sind die Querholme 10 im einander zugewandten Klemmbereich 18 derart profiliert, dass gegeneinander vorstehende Klemmkanten 20 gebildet sind, die zueinander versetzt in gleichen Abständen von der Mitte des Klemmbereichs 18 angeordnet sind. Im geklemmten Zustand, bei dem die Querholme 10 aneinander befestigt sind, kann durch die Verklemmung selbst eine Abdichtung gebildet sein oder zusätzlich durch Verschweißen der Rahmenteile 2, 4 mittels Ultraschallschweißung. Wie Fig. 6 zeigt, sind die Energierichtungsgeber 20 für das Ultraschallschweißverfahren durch vorspringende Rippen mit dreieckförmigem Querschnitt gebildet.

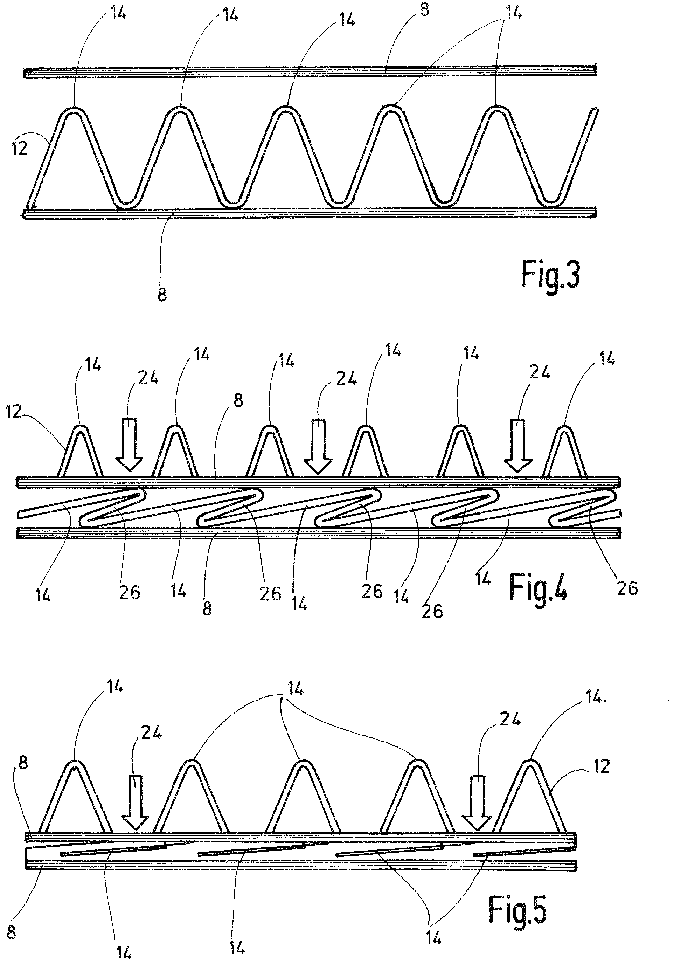

Wie die Fig. 3 bis 5 zeigen, ist das Filtermedium 12 mit seinen Endrändern 22 an den stirnseitigen Enden der Falten 14 den Längsholmen 8 der Rahmenteile 2, 4 zugeordnet. Nach dem Einlegen dieser Endränder 22 zwischen die Längsholme 8, wie es schematisiert in Fig. 3 angedeutet ist, werden für das Verklemmen die Falten 14 im eingelegten Bereich durch Gegeneinanderdrücken der Längsholme 8, wie in Fig. 4 mit Pfeilen 24 angedeutet ist, zur Bildung von Quetschfalten 26 zusammengedrückt. Die Fig. 4 und 5 verdeutlichen den Fortgang des Klemmvorgangs mit teilweise aufeinanderliegenden, flachgedrückten Falten 14. Im Übrigen entspricht der Festlegevorgang der Verklemmung, wie sie an den Querholmen 10 vorgesehen ist, also mit (an den Längsholmen 8 nicht bezifferten) Klemmkanten 20 und Verschweißen für die Bildung der Festlegung und der Abdichtung.

Mit Vorteil kann bei der erfindungsgemäßen Filtervorrichtung das Filtermedium 12 in Form eines sog. plissierten Mesh-Packs in flachgelegter Form gebildet sein, vorzugsweise mit Strukturlagen, die mit nur partieller Überdeckung der Fläche in den Faltenverbund eingefaltet sind, wie dies für zylinderförmige plissierte Filtermedien aus DE 10 2004 061 078 B4 bekannt ist. Bei dem vorliegenden Ausführungsbeispiel ist die Breite des mehrlagig aufgebauten Mesh-Pack durch die Breite von Grobfilterlagen 28 bestimmt, die als flexible, zur Bildung der Quetschfalten 26 verformbare Lagen vorzugsweise durch ein Polyamid-oder Polypropylenvlies gebildet sind. Als partielle Überdeckung der Grobfilterlagen 28 sind Stützlagen mit eingefaltet, die eine geringere Breite als die Grobfilterlagen 28 aufweisen und dadurch zu dem stirnseitigen Endrand 22 einen Abstand aufweisen, bei einer praktischen Ausführungsform beispielsweise im Bereich von 10 oder 20 mm. Zusätzlich kann eine Feinfilterlage mit eingefaltet sein, die mit der anliegenden Stützlage flächengleich fluchtet oder eine geringere Breite als diese hat. In Fig. 1 und 2 ist eine mit den Stützlagen kongruente Feinfilterlage mit 30 bezeichnet. Für die Getriebeölfiltration ist der aus den Rahmenteilen 2 und 4 gebildete Rahmen in einer nicht gezeigten Filterkassette oder in einer Ölwanne angeordnet, wobei, beispielsweise zur Saugfiltration, ein Fluideingang und ein Sauganschluss vorgesehen sind.

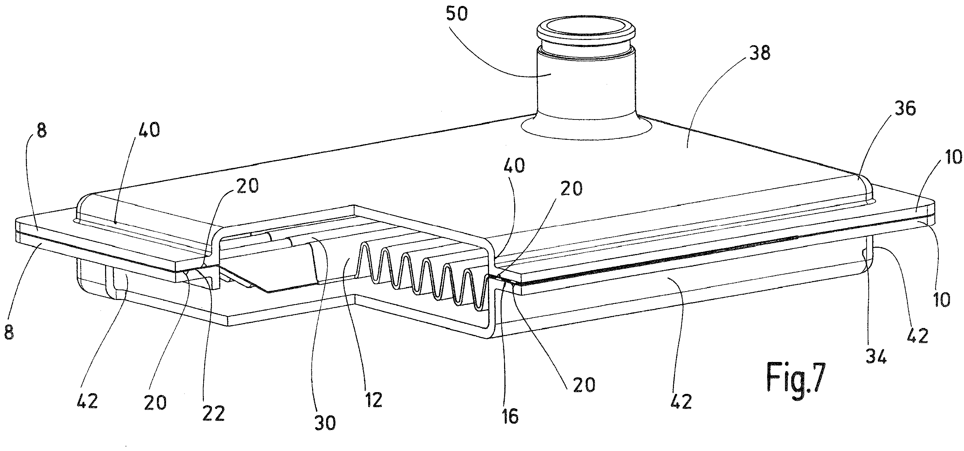

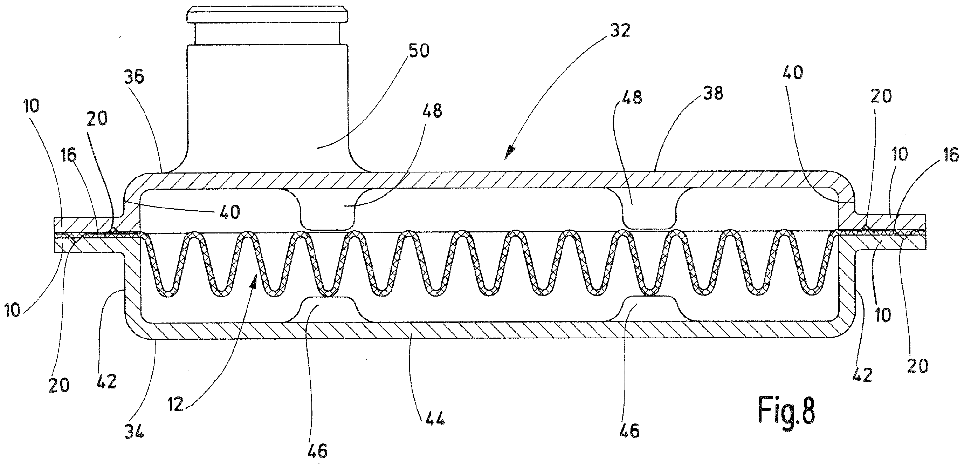

Die Fig. 7 und 8 zeigen ein Ausführungsbeispiel der erfindungsgemäßen Filtervorrichtung, bei dem das obere Rahmenteil 2 und das untere Rahmenteil 4 jeweils eine Oberschale 36 bzw. eine Unterschale 34 bilden, die zusammen eine Filterkassette umschließen, die Bestandteil einer Getriebeölwanne ist oder selbst die Ölwanne sein kann. Oberes und unteres Rahmenteil 2 und 4, mit gleichem rechteckförmigen Umriss wie beim ersten Ausführungsbeispiel, weisen die gleichen Längs- und Querholme 8 und 10 wie das erste Ausführungsbeispiel auf.

Im Unterschied hierzu umgeben jedoch die unteren Holme 8 und 10 den Außenrand der Unterschale 34, während die oberen Holme 8 und 10 den Außenrand der Oberschale 36 umgeben. Die letztere weist eine ebenflächige Deckwand 38 auf, die über Seitenwände 40, die von der Innenseite der oberen Holme 8, 10 nach oben verlaufen, in einem Abstand von der Ebene der Holme 8, 10 gehalten ist. Die Unterschale 34 weist von der Innenseite der unteren Holme 8, 10 nach unten vorstehende Seitenwände 42 auf, die in einen Schalenboden 44 übergehen, der in zur Deckwand 38 paralleler Ebene verläuft.

Wie die Fig. 7 und 8 zeigen, sind die Seitenwände 40 der Oberschale 36 höher als die Seitenwände 42 der Unterschale 34, so dass diese eine größere Schalentiefe besitzt als die Oberschale 36. Das Filtermedium 12 in Form des gleichen Mesh-Pack, wie es beim erstbeschriebenen Beispiel vorgesehen ist, ist in gleicher Weise, wie beim ersten Ausführungsbeispiel, mit den ersten und letzten flachgelegten Falten 14 zwischen den Querholmen 10 verklemmt und an der Faltenstirnseite mit Quetschfalten 26 zwischen den Längsholmen 8 verklemmt, wobei, wie beim ersten Beispiel, durch Energierichtungsgeber 20 und Verschweißung die Festlegung und die Abdichtung gebildet sind.

Wie Fig. 8 zeigt, ist das Filtermedium 12 im Innenraum von Ober- und Unterschale 36 bzw. 34 so aufgespannt, dass die Falten sich im Bereich der tieferen Unterschale 34 befinden. Um das Filtermedium 12 in der so aufgespannten Position zu sichern, sind am Schalenboden 44 nach oben vorstehende wulst-artige Abstandhalter 46 und an der Innenseite der Deckwand 38 nach unten vorstehende, wulstartige Abstandhalter 48 angeformt, die das Filtermaterial 12 zwischen sich positionieren. Für den Betrieb als Saugfilter ist an der Deckwand 38, außermittig, ein Sauganschluss 50 für den Abstrom des Filtrats vorgesehen. Ein an der Unterschale 34 vorgesehener Fluideinlass ist in der vorliegenden Zeichnung stirnseitig, dem Betrachter zugewandt, dargestellt.

## Patentansprüche

1. Filtervorrichtung, insbesondere für die Getriebeölfiltration, mit zwei aus Längs- und Querholmen bestehenden Rahm- oder Kassettenteilen (2, 4), die übereinandergelegt zumindest teilweise eine Durchflussfläche aufspannen, die von einem Filtermedium (12) überdeckt ist, das randseitig zwischen den Rahmenteilen (2, 4) festgelegt ist, **dadurch gekennzeichnet, dass** das Filtermedium (12) plissiert ist und dass die jeweilige Filterfalte (14), soweit sie zwischen die beiden Rahmen- oder Kassettenteile (2, 4) eingreift, flachgedrückt ist.

2. Filtervorrichtung nach Anspruch 1, **dadurch gekennzeichnet, dass** das Filtermedium (12) mehrlagig ist und zumindest die erste und die letzte Falte (14) dieses Lagenverbundes zwischen den beiden Rahmenteilen (2, 4) entlang deren Querholmen (10) festgelegt ist, die sich parallel zu den Filterfalten (14) erstrecken.

3. Filtervorrichtung nach Anspruch 1 oder 2, **dadurch gekennzeichnet, dass** zumindest eine der Lagen (30) zu den Längsholmen (8) der Rahmenteile (2, 4) derart einen Abstand einhält, dass nur die jeweils anderen Lagen (28) von den Längsholmen (8) flachgedrückt sind.

4. Filtervorrichtung nach einem der vorstehenden Ansprüche, **dadurch gekennzeichnet, dass**, sofern mehrere benachbart zueinander angeordnete Falten (14) flachgedrückt sind, diese zumindest teilweise aufeinanderliegend zwischen den Rahmenteilen (2, 4) aufgenommen sind, die vorzugsweise aus den Längsholmen (8) gebildet sind.

5. Filtervorrichtung nach einem der vorstehenden Ansprüche, **dadurch gekennzeichnet, dass** mindestens eine der Lagen des Filtermediums (12) als Grobfilterlage (28) randseitig von den beiden Rahmenteilen (2, 4) festgelegt ist.

6. Filtervorrichtung nach einem der vorstehenden Ansprüche, **dadurch gekennzeichnet, dass** mindestens eine weitere Lage des Filtermediums (12), als Feinfilterlage (30) ausgebildet, zusammen mit der jeweiligen Grobfilterlage (28) als Faltenverbund gefaltet und zumindest teilweise von den beiden Rahmenteilen (2, 4) freigelassen ist.

7. Filtervorrichtung nach einem der vorstehenden Ansprüche, **dadurch gekennzeichnet, dass** die jeweilige Grobfilterlage (28) oder der Lagenverbund aus mindestens einer Grob- (28) und einer Feinfilterlage (30) zumindest auf einer Seite, vorzugsweise auf beiden gegenüberliegenden Seiten, von einer Stützlage eingefasst ist, die zumindest teilweise zwischen den beiden Rahmenteilen (2, 4) festgelegt ist.

8. Filtervorrichtung nach einem der vorstehenden Ansprüche, **dadurch gekennzeichnet, dass** die beiden Rahmenteile (2, 4) auf ihren einander zugewandten Holmflächen zumindest teilweise mit Energierichtungsgeber (20) versehen sind, die auf die jeweilige Filterlage einwirken, sofern diese zwischen den beiden Rahmenteilen (2, 4) aufgenommen ist.

9. Filtervorrichtung nach einem der vorstehenden Ansprüche, **dadurch gekennzeichnet, dass** die beiden vorzugsweise aus Kunststoffmaterialien bestehenden Rahmenteile (2, 4) mit der jeweils aufgenommenen Filterlage miteinander verklebt oder verschweißt sind, vorzugsweise unter Einsatz eines Ultraschall-Schweißverfahrens.

10. Filtervorrichtung nach einem der vorstehenden Ansprüche, **dadurch gekennzeichnet, dass** die beiden Rahmenteile (2, 4) Bestandteile von Halbschalen (34, 36) sind, die für einen Einbau in eine Getriebeölwanne vorgesehen sind oder selbst die Getriebeölwanne ausbilden und die einmal einen Sauganschluss (50) und einmal einen Öleinlass aufweisen.
